(19) Europäisches Patentamt
European Patent Office
Office européen des brevets

(11) **EP 3 873 143 B1**

(12) **FASCICULE DE BREVET EUROPEEN**

(45) Date de publication et mention
de la délivrance du brevet:
**11.10.2023 Bulletin 2023/41**

(21) Numéro de dépôt: **21159268.8**

(22) Date de dépôt: **25.02.2021**

(51) Classification Internationale des Brevets (IPC):
***H04W 56/00*** *(2009.01)*

(52) Classification Coopérative des Brevets (CPC):
**H04W 56/002;** Y02D 30/70

(54) **MÉTHODE DE SYNCHRONISATION DE NOEUDS DANS UN RÉSEAU MAILLÉ DÉTERMINISTE**

METHODE ZUR SYNCHRONISIERUNG VON KNOTEN IN EINEM DETERMINISTISCHEN VERMASCHTEN NETZ

METHOD FOR SYNCHRONISING NODES IN A DETERMINISTIC MESH NETWORK

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **25.02.2020 FR 2001841**

(43) Date de publication de la demande:
**01.09.2021 Bulletin 2021/35**

(73) Titulaire: **COMMISSARIAT À L'ÉNERGIE ATOMIQUE ET AUX ÉNERGIES ALTERNATIVES**
**75015 Paris (FR)**

(72) Inventeurs:
• SMACHE, Meriem
38054 Grenoble Cedex 9 (FR)
• FRANCO RONDISSON, Thibault
38054 Grenoble Cedex 9 (FR)
• OLIVEREAU, Alexis
38054 Grenoble Cedex 9 (FR)
• TRIA, Assia
38054 Grenoble Cedex 9 (FR)

(74) Mandataire: **Brevalex**
**56, Boulevard de l'Embouchure**
**B.P. 27519**
**31075 Toulouse Cedex 2 (FR)**

(56) Documents cités:
WO-A2-2007/005148     WO-A2-2008/033514
CN-B- 105 704 808

• YANG WEI ET AL: "Enhanced secure time synchronisation protocol for IEEE802.15.4e-based industrial Internet of Things", IET INFORMATION SECURITY, THE INSTITUTION OF ENGINEERING AND TECHNOLOGY, MICHAEL FARADAY HOUSE, SIX HILLS WAY, STEVENAGE, HERTS. SG1 2AY, UK, vol. 11, no. 6, 1 novembre 2017 (2017-11-01), pages 369-376, XP006063804, ISSN: 1751-8709, DOI: 10.1049/IET-IFS.2016.0232

**Description**

**DOMAINE TECHNIQUE**

La présente invention concerne de manière générale le domaine des réseaux maillés sans fil, notamment les réseaux WSN (*Wireless Sensor Network*) conformes à la norme IEEE 802.15.4 et plus spécifiquement à sa version IEEE 802.15.4e. Elle trouve notamment application dans le domaine de l'Internet industriel des Objets ou IIoT (*Industrial Internet of Things*).

**ÉTAT DE LA TECHNIQUE ANTÉRIEURE**

Les réseaux de capteurs sans fil ou WSN (*Wireless Sensor Network*) sont de plus en plus fréquemment utilisés dans le domaine des infrastructures industrielles, notamment pour des applications nécessitant un contrôle d'informations critiques en temps réel. Lorsque ces réseaux sont reliés à Internet via une passerelle, on parle généralement d'Internet industriel des objets ou IIoT (*Industrial Internet of Things*). L'IIoT concerne des secteurs aussi variés que ceux de la production d'énergie (par exemple les centrales nucléaires), de l'approvisionnement (eau, carburants, gaz, énergie), des communications (par exemple entre drones), de la surveillance des infrastructures civiles (ponts, routes, pipelines) etc. Les cas d'usage de l'IIoT associent généralement une infrastructure industrielle complexe, un transfert déterministe des données critiques et une gestion en temps réel du processus de contrôle. Par transfert déterministe de données, on entend classiquement un acheminement garanti de ces données sous une contrainte de latence prédéterminée. En outre, les noeuds étant généralement autonomes en énergie, leur consommation doit être la plus faible possible.

Des protocoles de communication spécifiques ont été proposés pour satisfaire aux contraintes rigoureuses en termes de qualité de service des réseaux IIoT, et plus particulièrement celles relatives au déterminisme, à la fiabilité et à la consommation d'énergie. Ainsi, la norme IEEE 802.15.4 concernant la couche physique des réseaux WSN a été complétée au niveau liaison par une norme IEEE 802.15.4e portant sur la couche de contrôle d'accès au support ou MAC. Différentes piles protocolaires peuvent être ensuite envisagées au-dessus de la couche MAC normalisée par IEEE 802.15.4e en fonction du type d'application considérée.

La norme IEEE 802.15.4e utilise un contrôle d'accès, dit par saut de canal synchronisé dans le temps ou TSCH (*Time Synchronized Channel Hopping*). Ce type de contrôle d'accès permet d'obtenir une faible consommation d'énergie (faible rapport cyclique) tout en garantissant une fiabilité élevée. Plus précisément, l'accès des noeuds au support est divisé en trames temporelles (*slotframes*), chaque trame temporelle étant elle-même divisée en intervalles de temps d'accès (*timeslots*), l'accès des noeuds pendant un intervalle de temps d'accès étant réalisé par division de fréquence. Ainsi, un noeud peut se voir allouer un canal (en l'occurrence une fréquence), pour communiquer en émission ou en réception avec un autre noeud, pendant un intervalle de temps d'accès au sein d'une trame temporelle. L'ordonnancement des canaux au sein d'une trame temporelle se répète selon un schéma se répétant de manière cyclique à la fréquence de répétition des trames temporelles.

Les communications entre noeuds du réseau n'interfèrent pas dans la mesure où celles-ci utilisent des fréquences distinctes pendant un même intervalle de temps d'accès. En outre, les sauts de fréquence d'une trame à l'autre permettent au réseau d'être plus robuste aux évanouissements de canal ainsi qu'aux interférences liées aux trajets multiples.

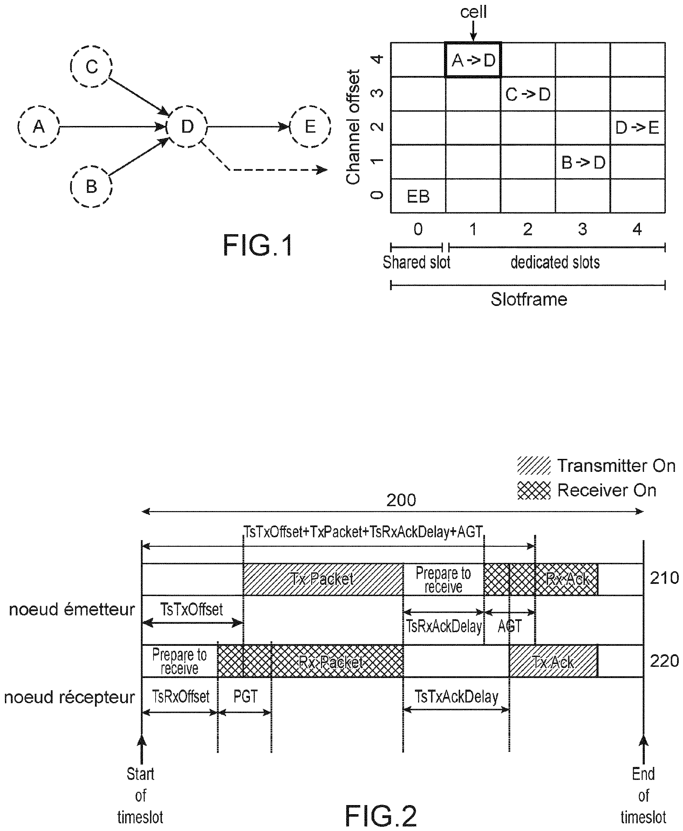

La Fig. 1 illustre de manière schématique un exemple d'ordonnancement de transmission entre noeuds d'un réseau WSN utilisant un contrôle d'accès de type TSCH.

On a désigné par A,B,C,D,E les différents noeuds du réseau et représenté à droite de la figure un schéma d'ordonnancement des transmissions entre ces noeuds pendant une trame temporelle (*slotframe*). Les transmissions sont programmées selon une matrice d'ordonnancement dont les lignes correspondent aux différents canaux et les colonnes aux intervalles de temps de la trame temporelle. Ainsi, dans l'exemple représenté, le noeud A transmet un paquet de données au noeud D pendant l'intervalle de temps d'accès d'indice 1, le noeud C transmet un paquet de données au noeud D pendant l'intervalle de temps d'accès d'indice 2, et ainsi de suite. Des couples de noeuds distincts peuvent communiquer sur des canaux distincts pendant un même intervalle de temps d'accès.

La Fig. 2 représente un exemple de chronogramme d'émission et de réception d'un paquet pour deux noeuds d'un réseau WSN utilisant le protocole TSCH.

Ce chronogramme concerne la transmission d'un paquet d'un premier noeud (noeud émetteur) à un second noeud (noeud récepteur) pendant un intervalle de temps d'accès, 200, d'une trame temporelle. La ligne 210 est relative au noeud émetteur et la ligne 220 au noeud récepteur.

La transmission du paquet de données intervient au bout d'un premier offset temporel TsTxOffset à partir du début de l'intervalle de temps d'accès, 200. Pendant ce premier offset temporel, l'émetteur du premier noeud prépare le paquet de données à envoyer et configure le circuit radio en fonction de la fréquence programmée dans la matrice d'ordonnancement. Au bout de cet offset temporel, l'émetteur réveille le circuit radio et transmet le paquet en question.

Après avoir transmis le dernier octet du paquet, le premier noeud se met en état de veille et attend l'accusé de réception du second noeud.

De manière similaire, le second noeud configure, pendant un second offset temporel, TsRxOffset, le circuit radio de son récepteur en fonction de la fréquence programmée dans la matrice d'ordonnancement. Au terme de cet offset, le récepteur du second noeud réveille son circuit radio et est prêt à recevoir le paquet de données du premier noeud. Si une période de garde, désignée par PGT (*Packet Guard Time*), démarrant au terme de TsRxOffset, s'est écoulée sans que le second noeud n'ait commencé à recevoir des données du paquet émis par le premier noeud, le récepteur éteint son circuit radio pour le reste de l'intervalle de temps d'accès 200. En revanche, s'il a commencé à recevoir un paquet pendant la période de garde PGT, le second noeud attend une période TsTxAckDelay après la fin de la réception du paquet pour transmettre un accusé de réception, TxAck.

Après la fin de l'émission du premier paquet, le premier noeud accorde au second noeud un certain temps, TsRxAckDelay, pour lui permettre de préparer l'accusé de réception. Si une période de garde, désignée par AGT (*Acknowledgement Guard Time*), démarrant au terme de TsRxAckDelay, s'est écoulée sans que le noeud émetteur n'ait reçu un accusé de réception, celui-ci considère que la transmission a échoué et éteint son circuit radio. On comprend ainsi que les périodes de garde PGT et AGT sont des fenêtres temporelles nominales pendant lesquelles un noeud attend une action d'un noeud voisin avec lequel il est en communication. L'absence de détection de l'action attendue pendant cette fenêtre temporelle nominale conduit à la mise en veille du noeud jusqu'à la fin de l'intervalle de temps d'accès en cours.

A partir de la matrice d'ordonnancement, des valeurs des offsets temporels TsTxOffset, TsRxOffset, et des durées des périodes de garde PGT, AGT (ces informations étant supposées connues par l'ensemble des noeuds), chaque noeud du réseau sait précisément quand il doit émettre ou recevoir et sur quel canal. Ainsi, le comportement du réseau est parfaitement déterministe et le temps de latence entre un noeud source et un noeud destinataire du réseau dans un schéma de transmission multi-bond est borné.

Le protocole TSCH suppose que les différents noeuds du réseau soient synchrones. Cette synchronisation est nécessaire dans la mesure où les horloges locales peuvent dériver les unes par rapport aux autres. La synchronisation est réalisée point à point lors d'une communication entre deux points du réseau ou bien en prévoyant une transmission périodique de paquets de synchronisation dans le réseau.

Comme indiqué en Fig. 2, le début du paquet, encore dénommé SFD (*Start Frame Délimiter*) est émis par le noeud émetteur un temps TsTxOffset après le début de l'intervalle de transmission. Le noeud récepteur peut alors horodater avec son horloge locale l'évènement de réception du début du paquet. Nous noterons R1 l'instant ainsi mesuré par l'horloge locale du noeud récepteur. Comme nous l'avons vu plus haut, au terme de la réception du paquet, le noeud récepteur attend un temps TsTxAckDelay pour transmettre son accusé de réception. Le noeud émetteur peut alors horodater avec son horloge locale l'évènement de réception de l'accusé de réception. Nous noterons R2 l'instant ainsi mesuré par l'horloge locale du noeud émetteur.

Deux cas sont à distinguer selon que le noeud émetteur ou le noeud récepteur sert de référence temporelle. S'il s'agit du noeud émetteur, le noeud récepteur pourra se synchroniser à partir de R1 et TsTxOffset. En revanche, s'il s'agit du noeud récepteur, le noeud émetteur pourra se synchroniser à partir de R2, TsTxOffset, TsTxAckDelay, et de la durée du paquet qu'il a émis.

Ainsi chaque noeud du réseau peut corriger la dérive relative de son horloge locale lors d'une communication point à point.

Cette méthode de synchronisation entre noeuds peut toutefois être perturbée par un noeud malveillant comme décrit dans l'article de W. Yang et al. intitulé « Enhanced secure time synchronisation protocol for IEEE 802.15.4e-based industrial Internet of Things, publié dans IET Information Security. 2017, Vol. 11, N° 6, pp. 369-376.

En effet, selon un schéma d'attaque par désynchronisation (également dénommée *timeslot template attack*), un noeud malveillant peut désynchroniser celui avec lequel il communique en retardant (ou avançant) volontairement l'instant auquel il doit émettre son paquet de données ou bien en retardant (ou avançant) l'instant auquel il doit émettre son accusé de réception.

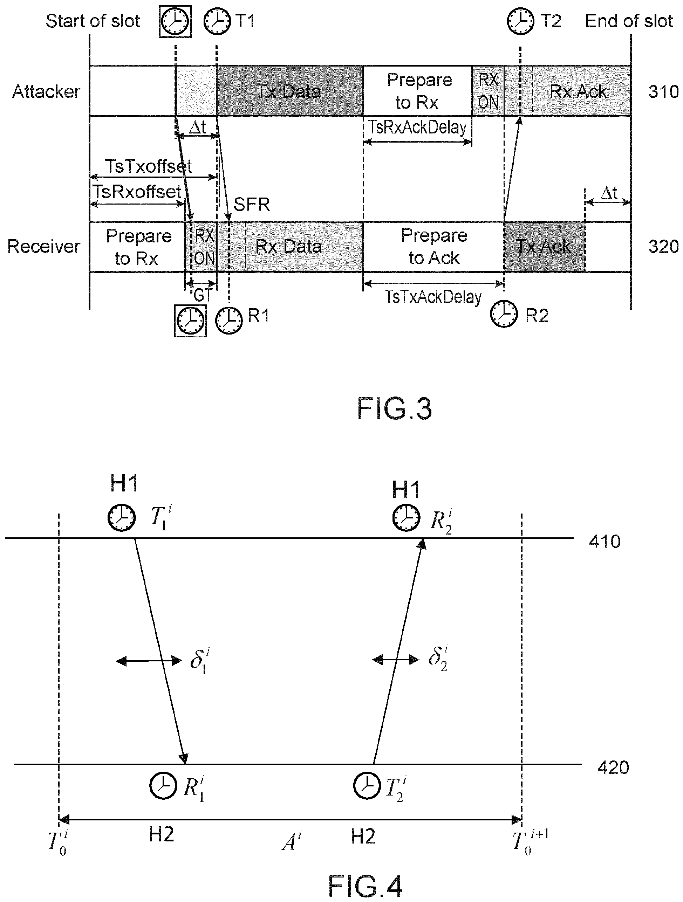

La Fig. 3 représente un exemple d'attaque par désynchronisation d'intervalle de temps d'accès dans un réseau WSN utilisant le protocole TSCH.

Comme en Fig. 2 le chronogramme concerne la transmission d'un paquet d'un noeud émetteur 310 à un noeud récepteur 320 pendant un intervalle de temps d'accès d'une trame temporelle. Dans l'exemple illustré, l'attaquant est le noeud émetteur. Celui-ci avance l'instant d'émission du début de son paquet (délimiteur SFD) d'un temps $\Delta t$ par rapport à l'instant de consigne, à savoir $T_0^i + TsTxOffset$ où $T_0^i$ est le début de l'intervalle de temps d'accès. Autrement dit, l'instant d'émission de SFD est $T_0^i + TsTxOffset - \Delta t$.

Si cet instant tombe pendant la période de garde PGT, la réception du paquet est considérée comme valide et le noeud récepteur cale son horloge locale de manière à faire coïncider la mesure de cet instant avec la valeur prévue soit $T_0^i + TsTxOffset$ (en négligeant le temps de propagation). Il en résulte que pour le noeud récepteur, l'intervalle de temps d'accès se termine en un instant intervenant $\Delta t$ plus tôt que prévu. Toute se passe ainsi comme si l'intervalle de transmission suivant dans la matrice d'ordonnancement était décalé de $-\Delta t$.

Bien entendu, la situation serait symétrique si le noeud récepteur était l'attaquant et avançait de $\Delta t$ l'instant d'émission de l'accusé de réception.

Cette désynchronisation se propage ensuite de proche en proche à l'ensemble du réseau. Il en résulte un décalage des émissions des noeuds par rapport aux instants prévus dans la matrice d'ordonnancement, puis une distribution chaotique de ces émissions conduisant à des collisions de paquets et à la perte du déterminisme du réseau. Les conséquences d'une telle attaque par désynchronisation peuvent être particulièrement sévères au regard du caractère temps réel des applications envisagées. Dès lors, il est important de pouvoir détecter suffisamment tôt une telle attaque et, le cas échéant, d'apporter des mesures correctrices.

Les solutions proposées dans l'état de la technique consistent généralement à observer, pour un noeud, les instants de réception des messages successifs transmis par ses noeuds voisins et à en déduire une estimation de l'instant de réception du prochain message émis par l'un de ces noeuds. Si la différence de temps en l'instant de réception ainsi estimé et l'instant de réception effectif de ce message excède en valeur absolue un seuil de tolérance prédéterminé, une attaque par désynchronisation (*timeslot template attack*) est détectée et le noeud voisin n'est plus pris en compte pour la synchronisation voire est éliminé du réseau.

La solution proposée dans l'article précité consiste à enregistrer les instants de réception des messages successifs (mesurés avec l'horloge locale du noeud de réception) ainsi que les instants d'émission de ces messages (mesurés avec l'horloge locale du noeud d'émission, supposée être une référence temporelle) et à en déduire les paramètres de dérive de l'horloge du noeud de réception par rapport à l'horloge du noeud d'émission. Il est alors possible de déduire à partir de l'instant de réception d'un paquet celui auquel il a été émis. Si la différence temporelle entre l'instant d'émission ainsi estimé et l'instant auquel il aurait dû être émis est supérieure en valeur absolue à un seuil de tolérance prédéterminé, une attaque est détectée et le noeud d'émission est exclu comme référence temporelle.

De manière générale, les propositions précitées ne sont pas satisfaisantes en pratique. En effet, un seuil de tolérance unique ne peut être envisagé et doit être calculé pour chaque noeud, ce qui devient particulièrement contraignant lorsque le réseau est dynamique, c'est-à-dire lorsque le réseau change de topologie au cours du temps (noeuds mobiles et/ou noeuds entrant ou sortant du réseau).

En outre, elles supposent quelquefois l'existence d'un noeud maître servant de référence temporelle unique aux autres noeuds du réseau. Or, la plupart des réseaux WSN ont une organisation distribuée et une topologie maillée, sans noeud maître.

Enfin, si les propositions précitées visent à détecter une attaque par désynchronisation (*timeslot template attack*), elles ne permettent toutefois pas de corriger l'erreur de synchronisation induite par cette attaque. L'exclusion du noeud ayant causé la désynchronisation peut intervenir trop tardivement, voire être insuffisante pour rétablir la synchronisation du réseau.

Un objet de la présente invention est par conséquent de remédier aux inconvénients précités et plus précisément de proposer une méthode de synchronisation d'un noeud dans un réseau maillé déterministe, tel qu'un réseau WSN utilisant un contrôle d'accès selon le mode TSCH, qui fonctionne dans une architecture entièrement distribuée, ne requière pas un calcul complexe de seuil de désynchronisation et permette une correction rapide en cas d'attaque par désynchronisation.

Le document WO2007/005148A2 est relatif à une méthode de synchronisation dans un réseau ad hoc TDMA.

**EXPOSÉ DE L'INVENTION**

La présente invention est définie par une méthode de synchronisation d'un noeud dans un réseau maillé déterministe, l'accès des noeuds du réseau au support de transmission étant programmé selon une trame temporelle divisée en intervalles de temps d'accès, ledit noeud pouvant communiquer avec ses noeuds voisins pendant des intervalles de temps d'accès de la trame temporelle en utilisant des ressources de transmission, ledit noeud étant pourvu d'une horloge locale et mesurant les décalages de synchronisation de cette horloge par rapport à l'horloge locale d'au moins un noeud voisin en détectant un évènement de réception d'un paquet émis par le noeud voisin ou d'un accusé de réception d'un paquet émis par ledit noeud à destination du noeud voisin, ladite méthode étant originale en ce que ledit noeud estime, à partir d'au moins un décalage de synchronisation ainsi mesuré, un décalage de synchronisation futur de l'horloge locale pour un intervalle de temps d'accès suivant celui pendant lequel a été effectuée la dernière mesure et corrige son horloge locale d'une valeur de correction égale à une fraction du décalage de synchronisation ainsi estimé.

Avantageusement, le décalage de synchronisation mesuré n'est pas pris en compte pour la correction s'il est supérieur à une première valeur de seuil prédéterminée.

Typiquement, la fraction du décalage est inférieure à la moitié décalage de synchronisation estimé.

Lorsque ladite valeur de correction est supérieure en valeur absolue à une seconde valeur de seuil prédéterminée, un défaut de synchronisation peut être signalé.

De préférence, le noeud estime un décalage de synchronisation futur de son horloge locale à partir d'une pluralité N de décalages de synchronisation, mesurés au cours d'intervalles de temps d'accès passés et de l'intervalle de temps d'accès courant, le noeud étant en communication avec l'un de ses noeuds voisins pendant les intervalles de temps d'accès passés et de l'intervalle de temps d'accès courant.

Le noeud peut estimer le décalage de synchronisation futur en effectuant une régression linéaire sur les N décalages de synchronisation, mesurés au cours d'intervalles de temps d'accès passés et de l'intervalle de temps d'accès courant.

Selon une première variante, le noeud enregistre dans une pile FIFO les (N-1) décalages de synchronisation mesurés au cours des intervalles d'accès passés, indépendamment du noeud voisin avec lequel ladite communication était établie.

Selon une seconde variante, le noeud enregistre dans une pluralité de piles FIFO les décalages de synchronisation mesurés au cours des intervalles d'accès passés, chaque pile étant associée à un noeud voisin et ne stockant que les décalages de synchronisation par rapport au noeud voisin auquel elle est associée.

La fraction du décalage de synchronisation estimé pourra être obtenue au moyen d'un apprentissage par renforcement multi-agent, chaque agent étant associé à un noeud du réseau.

Dans un cas typique d'application, le réseau de noeuds possède une couche physique conforme à la norme IEEE 802.15.4, une couche liaison conforme à la norme IEEE 802.15.4e, le contrôle d'accès des noeuds au support de transmission étant réalisé en mode TSCH.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un exemple d'ordonnancement de transmission entre noeuds d'un réseau WSN utilisant le protocole TSCH ;

La Fig. 2 représente un exemple de chronogramme d'émission et de réception d'un paquet pour deux noeuds d'un réseau WSN utilisant le protocole TSCH ;

La Fig. 3 représente un exemple d'attaque par désynchronisation d'intervalle de temps d'accès dans un réseau WSN utilisant le protocole TSCH ;

La Fig. 4 représente de manière schématique des décalages temporels mesurés par un noeud pour se synchroniser selon la méthode de synchronisation de l'invention ;

La Fig. 5 représente de manière schématique un ordinogramme de la méthode de synchronisation d'un noeud dans un réseau maillé déterministe, selon un mode de réalisation de l'invention.

## EXPOSÉ DÉTAILLÉ DE MODES DE RÉALISATION PARTICULIERS

On considérera dans la suite un réseau maillé déterministe au sens précédent, de topologie fixe ou dynamique. Le réseau est maillé et chaque noeud peut entrer en communication avec ses voisins, en émission ou en réception. On suppose en outre que l'accès au support des différents noeuds est programmé selon des trames temporelles (*slotframes*), chaque trame temporelle étant elle-même divisée en intervalles de temps d'accès (*timeslots*), l'accès des noeuds pendant un intervalle de temps d'accès faisant appel à des canaux de transmission distincts de manière à éviter les collisions de paquets entre différentes communications. Les ressources de transmission utilisées par les différents canaux au cours d'un intervalle de temps d'accès pourront notamment être des fréquences, des intervalles (*chunks*) de sous-porteuses de multiplex OFDM, des codes orthogonaux, voire une combinaison des ressources précédentes. Le contrôle d'accès des différents noeuds est programmé pendant chaque trame temporelle par une matrice d'ordonnancement dont une des dimensions (ci-après les colonnes) correspond aux intervalles de temps d'accès et l'autre dimension (ci-après les lignes) correspond aux ressources de transmission en question.

Un cas typique d'application de la présente invention est celui d'un réseau de capteurs (réseau WSN) dont les couches physiques (PHY) et liaison (MAC) sont respectivement conformes aux normes IEEE 802.15.4 et IEEE 802.15.4e et dont le contrôle d'accès au support se fait par saut de canal selon le mode TSCH comme décrit dans la partie introductive. Le mode TSCH peut être utilisé dans le cadre de plusieurs piles protocolaires, par exemple dans des réseaux 6tiSCH (IPv6 sur mode TSCH), 6LoWPAN, WirelessHART (Highway Addressable Remote Transducer), Wi-SUN (Smart Ubiquitous Networks), etc.

Nous considérerons dans la suite un couple de noeuds du réseau en question, à savoir un noeud émetteur et un noeud récepteur en communication l'un avec l'autre pendant un intervalle de temps d'accès donné $A^i = \left[ T_0^i, T_0^{i+1} \right]$, correspondant à la i$^{\text{ème}}$ colonne de la matrice d'ordonnancement. Le noeud émetteur et le noeud récepteur utilisent la ressource de transmission spécifiée dans la matrice d'ordonnancement pendant l'intervalle de temps d'accès, $A^i$.

Comme illustré dans le chronogramme de la Fig. 4, le noeud émetteur 410 émet un paquet sur cette ressource à l'instant $T_1^i = T_0^i + TsTxOffset$, mesuré par son horloge locale H1. Plus précisément, le délimiteur de début du paquet (SFD) quitte le noeud émetteur à cet instant, tel que mesuré par H1. Le paquet (c'est-à-dire son délimiteur SFD) est reçu par le noeud récepteur à l'instant $R_1^i$, tel que mesuré par son horloge locale, H2. Le noeud récepteur en déduit un premier décalage de synchronisation $\delta_1^i = R_1^i - \left( T_0^i + TsTxOffset \right)$, étant entendu que les valeurs $T_0^i$, $TsTxOffset$ sont connues de l'ensemble des noeuds du réseau et que ( $T_0^i + TsTxOffset$ ) est mesuré au moyen de l'horloge locale du noeud récepteur.

Au terme de la réception du paquet (c'est-à-dire sur réception du délimiteur de fin du paquet), le noeud récepteur attend un temps TsTxAckDelay et renvoie un accusé de réception au noeud émetteur, en un instant $T_2^i$, tel que mesuré par son horloge locale, H2. L'accusé de réception est reçu par le noeud émetteur à l'instant $R_2^i$, tel que mesuré par son horloge locale, H1. Le noeud émetteur en déduit un second décalage de synchronisation $\delta_2^i = R_2^i - T_2^i = R_2^i - \left( T_0^i + TsTxOffset + Tpacket + TsTxAckDelay \right)$, étant entendu que la valeur $TsTxAckDelay$ est connue de l'ensemble des noeuds du réseau et que, par définition, la durée du paquet, $Tpacket$, est connue du noeud émetteur. Le temps $T_2^i = \left( T_0^i + TsTxOffset + Tpacket + TsTxAckDelay \right)$ est mesuré au moyen de l'horloge locale du noeud émetteur, H1.

Au terme de cet échange, le noeud récepteur dispose d'un premier décalage de synchronisation, $\delta_1^i$, et le noeud émetteur dispose d'un second décalage de synchronisation, $\delta_2^i$.

Dans la suite, nous noterons de manière générique, $\delta$, pour désigner indifféremment le premier (ou le second) décalage de synchronisation, $\delta_1^i$ ( $\delta_2^i$ ), mesuré par un noeud lors de l'intervalle de temps d'accès $A^i$.

Ce calcul de décalage de synchronisation est répété pour tous les intervalles d'accès pendant lesquels un noeud est en communication (en émission ou en réception).

Dans un but de simplification de la présentation et sans perte de généralité, nous supposerons que les intervalles de temps d'accès pendant lesquels le noeud est en communication sont consécutifs et noterons $i - N + 1, ..., i - 2, i - 1, i$, les indices de ces intervalles, avec $N \geq 1$. Les décalages de synchronisation successivement mesurés par le noeud sont respectivement notés $\delta^{i-N+1}, ..., \delta^{i-2}, \delta^{i-1}, \delta^i$. A partir de ces décalages de synchronisation ainsi mesurés, le noeud estime son prochain décalage de synchronisation, soit $\hat{\delta}^{i+1}$, et effectue une correction de synchronisation d'un temps $\eta \hat{\delta}^{i+1}$, avec un facteur de rattrapage $\eta$, $0 < \eta \leq 1/2$, avant le début de l'intervalle d'accès suivant.

On comprend ainsi que si l'horloge locale du noeud retarde par rapport à l'horloge locale du noeud avec lequel il est en communication, cette horloge doive être avancée de $\eta|\hat{\delta}^{i+1}|$. Inversement, si l'horloge locale du noeud avance par rapport à l'horloge locale du noeud avec lequel il est en communication, cette horloge doit être retardée de $\eta|\hat{\delta}^{i+1}|$.

Si l'on désigne maintenant par $N_1$ et $N_2$ les deux noeuds en communication pendant l'intervalle de temps d'accès $A^i$, et que l'on note respectivement $\hat{\delta}_{N_1}^{i+1}$ et $\hat{\delta}_{N_2}^{i+1}$ les prochains décalages de synchronisation estimés par ces noeuds, le noeud $N_1$ appliquera une correction de synchronisation $\eta \hat{\delta}_{N_1}^{i+1}$ et le noeud $N_2$ appliquera une correction de synchronisation $\eta \hat{\delta}_{N_2}^{i+1}$, de sorte que l'écart de synchronisation relatif sera réduit de $\eta \left| \hat{\delta}_{N_2}^{i+1} - \hat{\delta}_{N_1}^{i+1} \right| = \eta \Delta_{N_1, N_2}^i$ où

$\Delta^i_{N_1,N_2}$ est le décalage (en valeur absolue) entre les horloges locales des noeuds $N_1$ et $N_2$, mesuré pendant l'intervalle de temps d'accès $A^i$.

Ainsi, la correction sera effectuée à parts égales entre le noeud d'émission et le noeud de réception. Le choix de $\eta = 1/2$ correspond au cas où l'on tente d'annuler en une seule fois le décalage entre les deux horloges locales pour l'intervalle de temps d'accès suivant. Toutefois, on pourra préférer effectuer cette compensation progressivement, en prenant une valeur de $\eta$ plus faible, par exemple $\eta = 1 / p$ avec $p > 2$ ou bien encore $\eta = 2^{-M}$ avec $M \geq 1$.

Il est important de noter que les corrections de synchronisation sont réalisées de manière distribuée sans noeud de référence. Les horloges locales des différents noeuds se synchronisent progressivement de proche en proche au fur et à mesure que s'établissent des communications entre les noeuds. Le facteur de rattrapage $\eta$ permet de contrôler la vitesse de convergence de la synchronisation du réseau, une faible valeur de ce facteur permettant notamment d'éviter un régime instable ou oscillatoire.

En pratique, chaque noeud enregistre dans une pile FIFO de taille $N - 1$ les décalages de synchronisation qu'il a successivement mesurés lors des $N - 1$ communications précédentes.

Ainsi, toujours dans l'hypothèse où ces communications ont lieu pendant des intervalles de temps d'accès consécutifs, les valeurs $\delta^{i-N+1},...,\delta^{i-2},\delta^{i-1}$ sont stockées dans la pile. Ces valeurs ainsi que la valeur mesurée lors de l'intervalle courant, $A^i$ servent à estimer le décalage de synchronisation lors de l'intervalle suivant $A^{i+1}$ et, comme déjà décrit, à effectuer une correction de synchronisation de $\eta\hat{\delta}^{i+1}$ de l'horloge locale. La valeur courante mesurée, $\delta^i$, est alors stockée dans la pile et la valeur la plus ancienne $\delta^{i-N+1}$ est dépilée.

De manière générale, lorsque les communications du noeud ont eu lieu pendant les intervalles d'accès, $A^{i-k_{N-1}},...,A^{i-k_2},A^{i-k_1}$ où $i-k_N,...,i-k_2, i-k_1$ sont les indices des $N-1$, derniers intervalles d'accès pendant lesquels le noeud en question a transmis ou reçu un paquet d'un noeud tiers, les valeurs de décalage $\delta^{i-k_{N-1}},...,\delta^{i-k_2},\delta^{i-k_1}$ sont stockées dans la pile. Une estimation du décalage de synchronisation lors de l'intervalle de temps d'accès $A^{i+1}$, c'est-à-dire $\hat{\delta}^{i+1}$, est obtenue à partir des valeurs de décalage stockées dans la pile et celle mesurée lors de l'intervalle de temps d'accès courant. La correction de décalage est réalisée avant le début de l'intervalle $A^{i+1}$. Alternativement, la correction pourra être réalisée ultérieurement, mais toutefois avant la prochaine communication du noeud.

Avantageusement, en sus des valeurs de décalage de synchronisation, le noeud pourra également stocker les indices des intervalles de temps d'accès pendant lesquels elles ont été mesurées. En effet, dans la prédiction $\hat{\delta}^{i+1}$, on comprend qu'une mesure de décalage soit d'autant moins prise en compte qu'elle est plus ancienne.

De manière générale, différentes méthodes de prédiction pourront être utilisées pour prédire $\delta^{i+1}$. On pourra notamment utiliser un modèle de prédiction autorégressif, un filtrage bayésien de manière connue de l'homme du métier. D'autres méthodes de prédiction pourront être envisagées sans sortir du cadre de la présente invention.

Selon une variante importante de réalisation, la correction de synchronisation n'est appliquée que dans la mesure où cette correction est inférieure en valeur absolue à un seuil prédéterminé, soit $\eta|\hat{\delta}^{i+1}|< \delta_{\max}$. A défaut, on conclura à un cas de défaut. Un tel cas de défaut pourra notamment survenir lorsqu'un noeud du réseau est soumis à une attaque de désynchronisation ou bien que son horloge est déficiente. Dans le cas d'un réseau WSN utilisant un contrôle d'accès selon le mode TDSCH, on choisira avantageusement

$$\delta_{\max} = \frac{1}{2}\min\left(\left|PGT\right|,\left|AGT\right|\right)$$

où $|PGT|,|AGT|$ sont les durées respectives des périodes de garde PGT et AGT. On s'assure ainsi que les périodes de garde lors d'une communication éventuelle entre les mêmes noeuds pendant l'intervalle de temps d'accès $A^{i+1}$ sont bien respectées.

Selon une autre variante, le décalage de synchronisation $\delta^i$, mesuré lors d'un intervalle de temps d'accès, $A^i$, est comparé avec la valeur prédite $\hat{\delta}^i$. Si la différence entre la valeur mesurée et la valeur prédite excède un certain seuil, soit $|\delta^i - \hat{\delta}^i| > \varepsilon$, les paramètres du modèle prédictif pourront être actualisés (autrement dit le modèle pourra être adaptatif).

Dans les modes de réalisation décrits précédemment, nous avons supposé que tous les décalages de synchronisation mesurés par un noeud en communication étaient stockés dans la même pile, indépendamment du noeud avec lequel il est en communication. Selon une variante, les valeurs de décalage mesurées peuvent être labellisées par les identifiants des noeuds avec lesquels la communication a été établie. Plus précisément, si l'on considère le noeud $N_1$ et l'on note $N^j_1$, $j = 1,..,J$ ses noeuds voisins, le noeud $N_1$ pourra gérer jusqu'à $J$ piles distinctes, chaque pile $j = 1,..,J$ étant dédiée au stockage des décalages de synchronisation, $\delta^{i-k^j_{N-1}},...,\delta^{i-k^j_2},\delta^{i-k^j_1}$ de l'horloge locale du noeud $N_1$ vis-à-vis de l'horloge du noeud $N^j_1$. On comprend que la correction appliquée à l'horloge locale, dépendra alors du noeud avec lequel la communication sera établie.

Quelle que soit la variante envisagée, le facteur de rattrapage pourra être déterminé au moyen d'une méthode d'apprentissage par renforcement multi-agent ou MARL (*Multi-Agent Reinforcement Learning*). On rappelle qu'une méthode d'apprentissage par renforcement est une méthode d'apprentissage automatique dans laquelle un agent autonome, plongé dans un environnement, apprend des actions à effectuer à partir d'expériences, de manière à optimiser une récompense cumulée au cours du temps. L'agent prend des décisions en fonction de son état courant et l'environnement lui procure des récompenses en fonction des actions qu'il effectue. Lorsque la méthode d'apprentissage est en outre du type multi-agent, chaque noeud joue le rôle d'un agent et apprend à partir de son environnement, en l'occurrence le réseau, les différents agents opérant de manière coopérative.

Plus précisément, pendant un intervalle de temps d'accès, $A^i$, chaque noeud en communication est dans un état $S_i$ (offset de son horloge locale par rapport à un temps de référence). Il effectue une estimation du décalage de synchronisation et estime la correction, $\eta_k \hat{\partial}^{i+1}$, à appliquer lors de l'intervalle d'accès suivant où $\eta_k$ appartient à un ensemble prédéterminé de valeurs de facteur de rattrapage.

Suite à une action, en l'occurrence suite à l'application de la correction de l'horloge locale par le noeud, son environnement (le réseau), lui retourne un nouvel état (correspondant à un nouvel offset de l'horloge locale) ainsi qu'une récompense (positive ou négative) qui est commune à l'ensemble des noeuds du réseau. Chaque noeud apprend ainsi de manière indépendante le facteur de rattrapage qu'il doit appliquer pour maximiser l'espérance mathématique de la somme des récompenses futures, pondérées par leurs facteurs d'actualisation respectifs. On pourra trouver une description des méthodes d'apprentissage par renforcement dans l'ouvrage de Richard S. Sutton et Andrew G. Barto intitulé « Reinforcement learning » , 2nd édition, 2018, pp. 129-132.

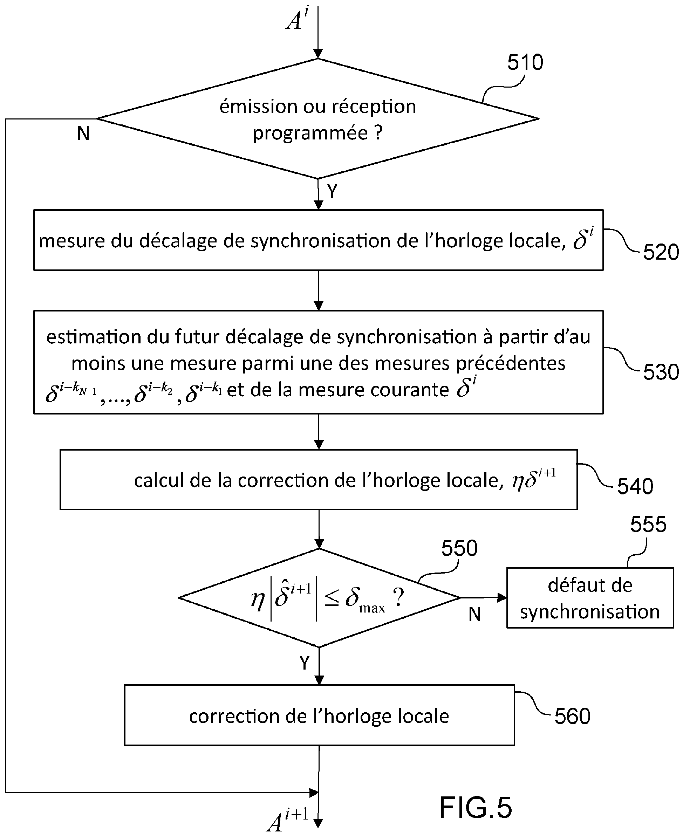

La Fig. 5 représente de manière schématique un ordinogramme de la méthode de synchronisation d'un noeud dans un réseau maillé déterministe, selon un mode de réalisation de l'invention.

La méthode de synchronisation est basée sur un processus périodique, se répétant à chaque intervalle de temps d'accès.

Nous considérerons par conséquent l'intervalle d'accès, $A^i$.

A l'étape 510, le noeud détermine s'il est programmé pour émettre un paquet à destination d'un noeud voisin ou bien recevoir un paquet d'un noeud voisin pendant l'intervalle de temps d'accès, $A^i$, à partir de la matrice d'ordonnancement.

Si ce n'est pas le cas, le noeud attend le prochain intervalle de temps d'accès, $A^{i+1}$.

En revanche, si une communication est établie en émission ou en réception avec un noeud voisin pendant l'intervalle de temps, $A^i$, le noeud mesure en 520 le décalage de synchronisation, $\partial$, de l'horloge locale avec le noeud voisin à partir de la détection d'un événement. Lorsque le noeud est récepteur, la mesure du décalage, $\delta_1^i$, est obtenue en par détection de l'instant auquel il reçoit le paquet du noeud voisin et plus précisément son délimiteur de début de paquet, SFD. En revanche, lorsque le noeud est émetteur, la mesure du décalage, $\delta_2^i$, est obtenue par détection de l'instant de réception de l'accusé de réception du paquet en question.

Lorsque la réception du paquet (resp. de l'accusé de réception) intervient en dehors d'une période de garde autorisée (PGT pour le paquet, AGT pour l'accusé de réception dans le cas d'un mode d'accès TSCH), le décalage de synchronisation n'est pas pris en compte pour la correction (étape non représentée). De manière équivalente, lorsque le décalage de synchronisation est supérieur à une (première) valeur de seuil prédéterminée, celui-ci n'est pas pris en compte pour la correction de synchronisation.

A l'étape 530, le noeud estime, à partir d'au moins une mesure de décalage de synchronisation le, futur décalage de synchronisation, $\hat{\partial}^{i+1}$, de son horloge locale pour l'intervalle de temps d'accès suivant, $A^{i+1}$ .

De préférence, cette estimation, $\hat{\partial}^{i+1}$, est réalisée à partir d'une pluralité de mesures de décalages de synchronisation précédentes, $\partial^{i-k_{N-1}},...,\partial^{i-k_2},\partial^{i-k_1}$, obtenues lors des intervalles de temps d'accès $A^{i-k_{N-1}},...,A^{i-k_2},A^{i-k_1}$, ainsi que de la mesure de décalage de synchronisation, $\partial^i$ relative à l'intervalle de temps d'accès en cours, $A^i$.

L'estimation, $\hat{\partial}^{i+1}$, peut être obtenue par exemple au moyen d'une régression linéaire.

A l'étape 540, le noeud calcule une correction de son horloge locale, c'est-à-dire avance ou retarde (selon le signe de $\hat{\partial}^{i+1}$) son horloge locale d'un temps $\eta|\hat{\partial}^{i+1}$, avec $0 < \eta \le 1/2$.

A l'étape optionnelle 550, on détermine si la correction est inférieure à une seconde valeur de seuil, soit $\eta|\hat{\partial}^{i+1} \le \delta_{max}$ . Si c'est le cas on poursuit à l'étape 560. Sinon, le noeud constate un cas de défaut de synchronisation en 555 et peut par exemple adapter les paramètres de son modèle auto-régressif.

A l'étape 560, le noeud corrige son horloge locale du montant de la correction. Plus précisément, si $\hat{\partial}^{i+1}$ est positif, c'est-à-dire si l'instant de réception mesuré avec l'horloge locale est arrivé plus tardivement que prévu, l'horloge est avancée et inversement si $\hat{\partial}^{i+1}$ est négatif, c'est-à-dire si l'instant de réception mesuré avec l'horloge locale est arrivé plus tôt que prévu, l'horloge locale est retardée de $\eta|\hat{\partial}^{i+1}|$.

Cette correction intervient avant le début de l'intervalle d'accès suivant, $A^{i+1}$, et, en tout état de cause, avant toute nouvelle communication du noeud programmée dans la matrice d'ordonnancement.

Le processus se poursuit avec le nouvel intervalle d'accès, $A^{i+1}$.

## Revendications

1. Méthode de synchronisation d'un noeud dans un réseau maillé déterministe, l'accès des noeuds du réseau au support de transmission étant programmé selon une trame temporelle divisée en intervalles de temps d'accès, ledit noeud pouvant communiquer avec ses noeuds voisins pendant des intervalles de temps d'accès de la trame temporelle en utilisant des ressources de transmission, ledit noeud étant pourvu d'une horloge locale et mesurant les décalages de synchronisation de cette horloge par rapport à l'horloge locale d'au moins un noeud voisin en détectant un évènement de réception d'un paquet émis par le noeud voisin ou d'un accusé de réception d'un paquet émis par ledit noeud à destination du noeud voisin, **caractérisé en ce que** ledit noeud estime, à partir d'au moins un décalage de synchronisation ainsi mesuré, un décalage de synchronisation futur de l'horloge locale pour un intervalle de temps d'accès suivant celui pendant lequel a été effectuée la dernière mesure et corrige son horloge locale d'une valeur de correction égale à une fraction du décalage de synchronisation ainsi estimé.

2. Méthode de synchronisation d'un noeud selon la revendication 1, **caractérisée en ce que** le décalage de synchronisation mesuré n'est pas pris en compte pour la correction s'il est supérieur à une première valeur de seuil prédéterminée.

3. Méthode de synchronisation d'un noeud selon la revendication 1 ou 2, **caractérisée en ce que** la fraction est inférieure à la moitié décalage de synchronisation estimé.

4. Méthode de synchronisation d'un noeud selon l'une des revendications précédentes, **caractérisée en ce que** lorsque ladite valeur de correction est supérieure en valeur absolue à une seconde valeur de seuil prédéterminée, un défaut de synchronisation est signalé.

5. Méthode de synchronisation d'un noeud selon l'une des revendications précédentes, **caractérisée en ce que** le noeud estime un décalage de synchronisation futur de son horloge locale à partir d'une pluralité N de décalages de synchronisation, mesurés au cours d'intervalles de temps d'accès passés et de l'intervalle de temps d'accès courant, le noeud étant en communication avec l'un de ses noeuds voisins pendant les intervalles de temps d'accès passés et de l'intervalle de temps d'accès courant.

6. Méthode de synchronisation d'un noeud selon la revendication 5, **caractérisée en ce que** le noeud estime le décalage de synchronisation futur en effectuant une régression linéaire sur les N décalages de synchronisation, mesurés au cours d'intervalles de temps d'accès passés et de l'intervalle de temps d'accès courant.

7. Méthode de synchronisation d'un noeud selon la revendication 5 ou 6, **caractérisée en ce que** le noeud enregistre dans une pile FIFO les (N-1) décalages de synchronisation mesurés au cours des intervalles d'accès passés, indépendamment du noeud voisin avec lequel ladite communication était établie.

8. Méthode de synchronisation d'un noeud selon la revendication 5 ou 6, **caractérisée en ce que** le noeud enregistre dans une pluralité de piles FIFO les décalages de synchronisation mesurés au cours des intervalles d'accès passés, chaque pile étant associée à un noeud voisin et ne stockant que les décalages de synchronisation par rapport au noeud voisin auquel elle est associée.

9. Méthode de synchronisation d'un noeud selon l'une des revendications précédentes, **caractérisée en ce que** la fraction du décalage de synchronisation estimé est obtenue au moyen d'un apprentissage par renforcement multiagent, chaque agent étant associé à un noeud du réseau.

10. Méthode de synchronisation d'un noeud selon les revendications précédentes, **caractérisée en ce que** le réseau de noeuds possède une couche physique conforme à la norme IEEE 802.15.4, une couche liaison conforme à la norme IEEE 802.15.4e, le contrôle d'accès des noeuds au support de transmission étant réalisé en mode TSCH.

**Patentansprüche**

1. Verfahren zur Synchronisierung eines Knotens in einem deterministischen vermaschten Netz, wobei der Zugriff der Knoten des Netzes auf das Übertragungsmedium gemäß einer Zeitskala programmiert ist, die in Zugriffszeitintervalle unterteilt ist, wobei der Knoten mit seinen Nachbarknoten während den Zugriffszeitintervallen der Zeitskala unter Verwendung von Übertragungsressourcen kommunizieren kann, wobei der Knoten mit einer lokalen Uhr ausgestattet ist und die Synchronisierungsverschiebungen dieser Uhr relativ zur lokalen Uhr von mindestens einem Nachbarknoten gemessen werden, indem ein Empfangsereignis eines Datensatzes detektiert wird, das vom Nachbarknoten emittiert wurde, oder eine Empfangsbestätigung eines Datensatzes, die vom Knoten in Richtung des Nachbarknotens emittiert wurde, dadurch charakterisiert, dass der Knoten, ausgehend von mindestens einer so gemessenen Synchronisierungsverschiebung, eine zukünftige Synchronisierungsverschiebung der lokalen Uhr für einen Zugriffszeitintervall schätzt, das auf jenes folgt, während dem die letzte Messung durchgeführt wurde, und seine lokale Uhr um einen Korrekturwert korrigiert, der einem Bruchteil der so geschätzten Synchronisierungsverschiebung entspricht.

2. Verfahren zur Synchronisierung eines Knotens nach Anspruch 1, **dadurch gekennzeichnet, dass** die gemessene Synchronisierungsverschiebung für die Korrektur nicht berücksichtigt wird, wenn sie größer ist als ein vorbestimmter erster Schwellenwert.

3. Verfahren zur Synchronisierung eines Knotens nach Anspruch 1 oder 2, **dadurch gekennzeichnet, dass** der Bruchteil kleiner ist als die Hälfte der geschätzten Synchronisierungsverschiebung.

4. Verfahren zur Synchronisierung eines Knotens nach einem der vorhergehenden Ansprüche, **dadurch gekennzeichnet, dass**, wenn der Korrekturwert im absoluten Wert größer ist als ein vorbestimmter zweiter Schwellenwert, ein Fehler der Synchronisierung gemeldet wird.

5. Verfahren zur Synchronisierung eines Knotens nach einem der vorhergehenden Ansprüche, **dadurch gekennzeichnet, dass** der Knoten eine zukünftige Synchronisierungsverschiebung seiner lokalen Uhr ausgehend von einer Vielzahl N von Synchronisierungsverschiebungen schätzt, die im Verlauf der vergangenen Zugriffszeitintervalle und dem aktuellen Zugriffszeitintervall gemessen wurden, wobei der Knoten während den vergangenen Zugriffszeitintervallen und dem aktuellen Zugriffszeitintervall mit einem seiner Nachbarknoten kommuniziert.

6. Verfahren zur Synchronisierung eines Knotens nach Anspruch 5, **dadurch gekennzeichnet, dass** der Knoten die zukünftige Synchronisierungsverschiebung schätzt, indem er eine lineare Regression auf die N Synchronisierungsverschiebungen durchführt, die im Verlauf der vergangenen Zugriffszeitintervalle und des aktuellen Zugriffszeitintervalls gemessen wurden.

7. Verfahren zur Synchronisierung eines Knotens nach Anspruch 5 oder 6, **dadurch gekennzeichnet, dass** der Knoten in einem FIFO-Stapel die (N-1) Synchronisierungsverschiebungen aufzeichnet, die im Verlauf der vergangenen Zugriffsintervalle gemessen wurden, unabhängig vom Nachbarknoten, mit dem die Kommunikation hergestellt wurde.

8. Verfahren zur Synchronisierung eines Knotens nach Anspruch 5 oder 6, **dadurch gekennzeichnet, dass** der Knoten in einer Vielzahl von FIFO-Stapeln die im Verlauf der vergangenen Zugriffsintervalle gemessenen Synchronisierungsverschiebungen aufzeichnet, wobei jeder Stapel einem Nachbarknoten zugeordnet ist und nur die Synchronisierungsverschiebungen relativ zum Nachbarknoten speichert, dem er zugeordnet ist.

9. Verfahren zur Synchronisierung eines Knotens nach einem der vorhergehenden Ansprüche, **dadurch gekennzeichnet, dass** der Bruchteil der geschätzten Synchronisierungsverschiebung mittels verstärkendem Lernen durch Multiagenten erhalten wird, wobei jeder Agent einem Knoten im Netz zugeordnet ist.

10. Verfahren zur Synchronisierung eines Knotens nach den vorhergehenden Ansprüchen, **dadurch gekennzeichnet, dass** das Netz der Knoten eine physikalische Schicht aufweist, die konform ist mit der Norm IEEE 802.15.4, und eine Verbindungsschicht, die konform ist mit der Norm IEEE 802.15.4e, wobei die Zugriffskontrolle der Knoten auf das Übertragungsmedium im TSCH-Modus erfolgt.

**Claims**

1.  Method for synchronising a node in a deterministic mesh network, the access of the nodes of the network to the transmission medium being programmed according to a slotframe split into timeslots, said node being able to communicate with its neighbour nodes during timeslots of the slotframe by using transmission resources, said node being provided with a local clock and measuring the synchronisation offsets of this clock in relation to the local clock of at least one neighbour node by detecting a reception event of a packet transmitted by the neighbour node or an acknowledgement of a packet transmitted by said node to the neighbour node, **characterised in that** said node estimates, from at least one synchronisation offset thus measured, a future synchronisation offset of the local clock for a timeslot following the one for which the last measurement was carried out and corrects its local clock by a correction value equal to a fraction of the synchronisation offset thus estimated.

2.  Method for synchronising a node according to claim 1, **characterised in that** the synchronisation offset measured is not taken into account for the correction if it is greater than a first predetermined threshold value.

3.  Method for synchronising a node according to claim 1 or 2, **characterised in that** the fraction is less than half of the estimated synchronisation offset.

4.  Method for synchronising a node according to one of the preceding claims, **characterised in that** when said correction value is greater in absolute value than a second predetermined threshold value, a synchronisation fault is signalled.

5.  Method for synchronising a node according to one of the preceding claims, **characterised in that** the node estimates a future synchronisation offset of its local clock from a plurality N of synchronisation offsets, measured during past timeslots and the current timeslot, the node being in communication with one of its neighbour nodes during the past timeslots and the current timeslot.

6.  Method for synchronising a node according to claim 5, **characterised in that** the node estimates the future synchronisation offset by carrying out a linear regression on the N synchronisation offsets, measured during past timeslots and the current timeslot.

7.  Method for synchronising a node according to claim 5 or 6, **characterised in that** the node records in a FIFO stack the (N-1) synchronisation offsets measured during past timeslots, independently of the neighbour node with which said communication was established.

8.  Method for synchronising a node according to claim 5 or 6, **characterised in that** the node records in a plurality of FIFO stacks the synchronisation offsets measured during past timeslots, each stack being associated with a neighbour node and only storing the synchronisation offsets in relation to the neighbour node with which it is associated.

9.  Method for synchronising a node according to one of the preceding claims, **characterised in that** the fraction of the estimated synchronisation offset is obtained by means of multi-agent reinforcement learning, each agent being associated with a node of the network.

10. Method for synchronising a node according to the preceding claims, **characterised in that** the network of nodes possesses a physical layer in accordance with the standard IEEE 802.15.4, a data link layer in accordance with the standard IEEE 802.15.4e, the access control of the nodes to the transmission medium being performed in TSCH mode.

FIG.1

FIG.2

Start of slot  🕐 🕐 T1                                    🕐 T2   End of slot

| Attacker | | | Tx Data | Prepare to Rx | RX ON | Rx Ack | 310 |

$\Delta t$

TsRxAckDelay

TsTxoffset

TsRxoffset

SFR

$\Delta t$

| Receiver | Prepare to Rx | RX ON | Rx Data | Prepare to Ack | Tx Ack | 320 |

GT

TsTxAckDelay

🕐 R1                                    🕐 R2

## FIG.3

H1                                          H1

🕐 $T_1^i$                                  🕐 $R_2^i$

410

$\delta_1^i$                                $\delta_2^i$

420

🕐 $R_1^i$                                  🕐 $T_2^i$

$T_0^i$      H2              $A^i$      H2        $T_0^{i+1}$

## FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007005148 A2

**Littérature non-brevet citée dans la description**

- **W. YANG et al.** Enhanced secure time synchronisation protocol for IEEE 802.15.4e-based industrial Internet of Things. *IET Information Security,* 2017, vol. 11 (6), 369-376

- **RICHARD S. SUTTON ; ANDREW G. BARTO.** *Reinforcement learning,* 2018, 129-132